# EUROPEAN PATENT APPLICATION

(11) **EP 3 400 827 A1**
(43) Date of publication of application: **14.11.2018**
(21) Application number: 17186143.8
(22) Date of filing: 14.08.2017
(51) Int. Cl.: A45D 44/00, G06F 3/048, G06K 9/00, H04N 5/272

(54) **ELECTRONIC MAKE-UP MIRROR DEVICE AND BACKGROUND SWITCHING METHOD THEREOF**

(30) Priority: 08.05.2017 CN 201710316044
(71) Applicant: Cal-Comp Big Data, Inc., New Taipei City 22201 (TW)
(72) Inventor: SHEN, Shyh-Yong, 22201 Shenkeng Dist., New Taipei City (TW); CHI, Min-Chang, 22201 Rd., Shenkeng Dist., New Taipei City (TW); Huang, Yi-Feng, 22201 Shenkeng Dist., New Taipei, City (TW)
(74) Representative: 2K Patentanwälte Blasberg Kewitz & Reichel

(57) **Abstract**

An electronic make-up mirror device and a background switching method thereof are provided. The electronic make-up mirror device includes a screen, an image capturing device and a gesture sensor. The method includes following steps. An initial image is captured by using the image capturing device, and an initial frame including the initial image is displayed through the screen. The initial image is analyzed to obtain a foreground object and a background image, where the foreground object includes a face image. A background selection frame is displayed through the screen in response to a first operation according to whether the first operation performed to the initial frame is received. The foreground object and a predetermined background image are integrated in response to reception of a second operation performed to the background selection frame, so as to generate an integrated image, and a switched result frame including the integrated image is displayed.

## Description

### BACKGROUND OF THE INVENTION

### Field of the Invention

The invention relates to a background switching technique, and particularly relates to an electronic make-up mirror device and a background switching method thereof.

### Description of Related Art

To put on make-up is one of the ways of facial beautifying, and is a part of social etiquettes in some occasions. Moreover, the make-up may also increase self-confidence of a person, and even serves as one of the means of health care, so that more and more people have the habit of putting on the make-up. However, when a user puts on the make-up, the user probably requires to select a proper make-up to cope with various background situations and occasions. Therefore, during a conversional make-up process, the user has to evaluate a make-up method through a way of imaging the background situation. Namely, the user probably requires to spend a lot of time and cost on the make-up to try out a proper make-up effect, which results in a fact that the user cannot put on make-up in an efficient and accurate way during each make-up process.

### SUMMARY OF THE INVENTION

It is an object of the present invention to provide an enhanced electronic make-up mirror device and a corresponding method for operating the same, enabling a user to put on make-up in an efficient and accurate way during each make-up process.

This problem is solved by a background switching method adapted to an electronic make-up mirror device as claimed by claim 1 and by an electronic make-up mirror device as claimed by claim 8. Further advantageous embodiments are the subject-matter of the dependent claims.

The invention is thus directed to an electronic make-up mirror device and a background switching method thereof, which are adapted to provide convenient make-up background switching according to user's requirement, so as to provide good user experience. The invention thus allows the user to quickly and accurately put on the make-up with reference of a corresponding background situation or even allow the user to put on the make-up in a comfortable picture during the make-up process.

The invention provides a background switching method, which is adapted to an electronic make-up mirror device. The electronic make-up mirror device includes a screen, an image capturing device and a gesture sensor. The method includes following steps. An initial image is captured by using the image capturing device, and an initial frame including the initial image is displayed through the screen. The initial image is analyzed to obtain a foreground object and a background image, where the foreground object includes a face image. A background selection frame is displayed through the screen in response to a first operation according to whether the first operation performed to the initial frame is received. The foreground object and a predetermined background image are integrated in response to reception of a second operation performed to the background selection frame, so as to generate an integrated image, and a switched result frame including the integrated image is displayed through the screen.

In an embodiment of the invention, the first operation includes: identifying first gesture information according to whether the gesture sensor acquires the first gesture information; and generating a first input instruction when the first gesture information is complied with a first predetermined gesture, such that the screen displays the background selection frame.

In an embodiment of the invention, the second operation includes: identifying second gesture information according to whether the gesture sensor acquires the second gesture information; and generating a second input instruction when the second gesture information is complied with a second predetermined gesture, so as to execute a background selection function.

In an embodiment of the invention, the second operation further includes: identifying third gesture information according to whether the gesture sensor acquires the third gesture information; and generating a third input instruction when the third gesture information is complied with a third predetermined gesture, and confirming a selection result of the background selection function to determine the predetermined background image.

In an embodiment of the invention, the step of integrating the foreground object and the predetermined background image in response to reception of the second operation performed to the background selection frame further includes: identifying fourth gesture information according to whether the gesture sensor acquires the fourth gesture information; and generating a fourth input instruction when the fourth gesture information is complied with a fourth predetermined gesture, and ending the background selection function, and displaying the switched result frame through the screen.

In an embodiment of the invention, the step of analyzing the initial image to obtain the foreground object and the background image includes: analyzing the initial image according to a Gaussian mixture model, so as to obtain the foreground object and the background image.

In an embodiment of the invention, the step of analyzing the initial image to obtain the foreground object and the background image includes: determining a position of the face image in the initial image to determine a contour, and distinguishing the foreground object and the background image in the initial image according to the contour.

The invention provides an electronic make-up mirror device including a screen, a processor and an image capturing device. The processor is coupled to the screen. The image capturing device is coupled to the processor. The image capturing device is configured to capture an initial image, and an initial frame including the initial image is displayed through the screen. The processor analyzes the initial image to obtain a foreground object and a background image, where the foreground object includes a face image. The processor displays a background selection frame through the screen in response to a first operation according to whether the first operation performed to the initial frame is received. The processor integrates the foreground object and a predetermined background image in response to reception of a second operation performed to the background selection frame, so as to generate an integrated image, and displays a switched result frame including the integrated image through the screen.

In an embodiment of the invention, the electronic make-up mirror device further includes a gesture sensor. The first operation refers to that the processor identifies first gesture information according to whether the gesture sensor acquires the first gesture information, and generates a first input instruction when the first gesture information is complied with a first predetermined gesture, such that the screen displays the background selection frame.

In an embodiment of the invention, the second operation refers to that the processor identifies second gesture information according to whether the gesture sensor acquires the second gesture information, and generates a second input instruction when the second gesture information is complied with a second predetermined gesture, so as to execute a background selection function.

In an embodiment of the invention, the second operation further refers to that the processor identifies third gesture information according to whether the gesture sensor acquires the third gesture information, and generates a third input instruction when the third gesture information is complied with a third predetermined gesture, so as to confirm a selection result of the background selection function, and determine the predetermined background image.

In an embodiment of the invention, the second operation further refers to that the processor identifies fourth gesture information according to whether the gesture sensor acquires the fourth gesture information, and generates a fourth input instruction when the fourth gesture information is complied with a fourth predetermined gesture, so as to ends the background selection function, and display the switched result frame through the screen.

In an embodiment of the invention, the processor analyzes the initial image according to a Gaussian mixture model, so as to obtain the foreground object and the background image.

In an embodiment of the invention, the processor determines a position of the face image in the initial image to determine a contour, and distinguishes the foreground object and the background image in the initial image according to the contour.

According to the above description, the electronic make-up mirror device and the background switching method thereof provide a selection frame for the user to select a background through a touch operation or a gesture operation, so as to conveniently switch the background image during a make-up process, such that the user may select a proper or comfortable background image according to user's requirement when the user puts on make-up.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a block diagram of an electronic make-up mirror device according to an embodiment of the invention.
FIG. 2 is a schematic diagram of an electronic make-up mirror device according to an embodiment of the invention.
FIG. 3 is a flowchart illustrating a background switching method according to an embodiment of the invention.
FIG. 4 is a schematic diagram of an initial frame according to an embodiment of the invention.
FIG. 5 is a schematic diagram of a background selection frame according to an embodiment of the invention.
FIG. 6 is a schematic diagram of a switched result frame according to an embodiment of the invention.

### DESCRIPTION OF EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

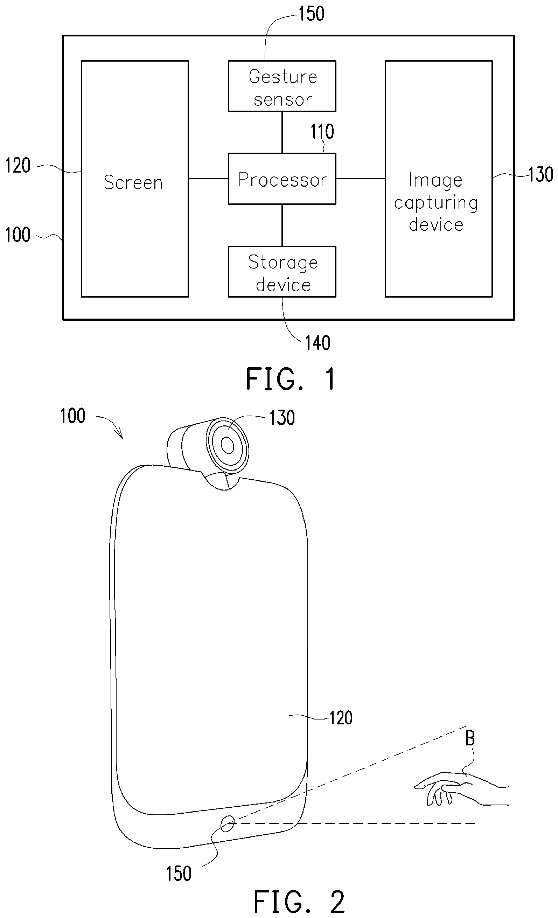

FIG. 1 is a block diagram of an electronic make-up mirror device according to an embodiment of the invention. Referring to FIG. 1, the electronic make-up mirror device 100 includes a processor 110, a screen 120, an image capturing device 130, a storage device 140 and a gesture sensor 150. The processor 110 is coupled to the screen 120, the image capturing device 130, the storage device 140 and the gesture sensor 150. In the present embodiment, the electronic make-up mirror device 100 can be a device disposed on a make-up table, and the screen 120 of the electronic make-up mirror device 100 can be disposed behind the mirror, and a text or an image displayed by the screen 120 may pass through the mirror for the user to view. In other embodiments, the electronic make-up mirror device 100 can also be a portable mirror box combined with a portable mirror. For example, in an embodiment, in an embodiment, when the screen 120 is enabled to display an image frame, the user may obtain a user image acquired by the image capturing device 130 through the screen 120. When the screen 120 is not enabled to display the image frame, the screen 120 presents a black color, and the user may view the reflected user image through the mirror.

In the present embodiment, the processing unit 110 can be a central processing unit (CPU), or other programmable general purpose or special purpose microprocessor, a digital signal processor (DSP), a programmable controller, an application specific integrated circuits (ASIC), a programmable logic device (PLD), other similar processing devices or a combination of the aforementioned devices. In an embodiment, the processor 110 may further include a graphics processing unit (GPU), or a vision processing unit (VPU) to execute operation functions of various embodiments of the invention such as image processing, identifying and analyzing.

In the present embodiment, the screen 120 can be a display device used for providing a display function and disposed in a display area of the electronic make-up mirror device 100. The screen 120 can be a display screen device used for providing the display function, such as a liquid crystal display (LCD), a light-emitting diode (LED), a field emission display (FED), etc. In the present embodiment, the image capturing device 130 can be a camera or a video camera, and is used for capturing a face image of the user, where the face image is picture data.

In the present embodiment, the storage unit 140 can be any type of a fixed or movable random access memory (RAM), a read-only memory (ROM), a flash memory or other similar devices, or a combination of the devices, and is used for recording a plurality of instructions or a plurality of modules adapted to be executed by the processor 110, where the instructions or the modules can be loaded into the processor 110. The storage unit 140 can also be used for storing a plurality of background images in advance. The processor 110 may implement an image processing method and a background switching method mentioned in the embodiments of the invention by executing the instructions or the modules. Namely, various steps of the background switching method of the embodiments of the invention can be implemented by chip hardware or firmware in the electronic make-up mirror device 100, and can be implemented by software or application programs stored in the storage unit 140, and executed by the processor 110 in the electronic make-up mirror device 100.

In the present embodiment, the gesture sensor 150 can be an image sensor, an infrared sensor or an acoustic wave sensor, etc., which is adapted to sense a gesture of the user. Moreover, in an embodiment, the gesture sensor 150 can also be a motion sensor or a proximity sensor, etc., which is not limited by the invention. Therefore, gesture information mentioned in various embodiments of the invention can be an image signal, an infrared signal, a sound signal, etc.

Moreover, in the invention, a touch screen 120 can be adopted to input data and select icons, or an input device (not shown) such as a mouse, a keyboard, a joystick or a touch panel, etc., can be externally connected to input data and select icons, or the gesture sensor 150 is adopted to identify gestures to input data and select icons, or even voice control can be adopted to input data and select icons, which is not limited by the invention.

FIG. 2 is a schematic diagram of the electronic make-up mirror device according to the embodiment of FIG. 1. Referring to FIG. 2, in the present embodiment, the image capturing device 130 of the electronic make-up mirror device 100 can be disposed on the top of the screen 120 to capture the face image of the user located in the front. The gesture sensor 150 of the electronic make-up mirror device 100 can be disposed on the bottom of the screen 120 to acquire gesture information of the user located in the front. For example, the electronic make-up mirror device 100 may analyze the gesture information acquired by the gesture sensor 150. The electronic make-up mirror device 100 may determine whether a hand portion B of the user is detected in an acquiring range, and further record a gesture change of the hand portion B. The storage device 140 may pre-store a plurality of gestures. When the processor 110 identifies that the gesture information of the hand portion B is complied with the pre-stored gesture, the processor 110 correspondingly generates an input instruction to execute a related frame operation. However, in the invention is not limited thereto, and in an embodiment, the screen 120 may also have a touch sensing function, such that the user may perform the related frame operation of the electronic make-up mirror device 100 through a touch manner. For example, the frame displayed by the screen 120 may include a plurality of icons for the user to select, so as to perform a switch operation of background images.

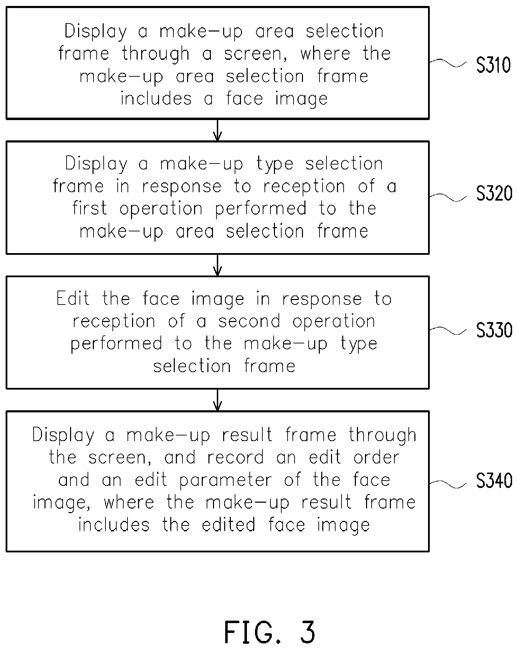

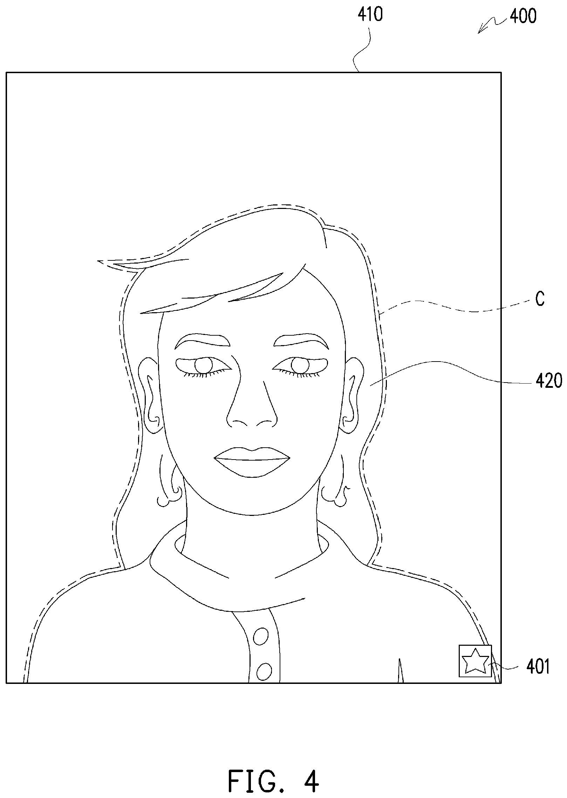

FIG. 3 is a flowchart illustrating a background switching method according to an embodiment of the invention. Referring to FIG. 1 and FIG. 3, the background switching method of the invention is at least adapted to the electronic make-up mirror device 100 of FIG. 1. In step S310, the processor 110 obtains an initial image through the image capturing device 130, and displays initial frame including the initial image through the screen 120. Referring to FIG. 4, the initial frame 400 may include the initial image. The user may use the initial frame 400 of the screen 120 of the electronic make-up mirror device 100 as a mirror to put on make-up. In step S320, the processor 110 analyzes the initial image to obtain a background image 410 and a foreground object 420, where the foreground object 420 is the face image of the user.

It should be noted that the method for analyzing the foreground object and the background image mentioned in the embodiment of the invention can be implemented by using any proper image processing technique of the related technical field. For example, in the present embodiment, the processor 110 may analyze the initial image according to a Gaussian mixture model (GMM) to detect the foreground object 420. The processor 110 may take an image except the foreground object 420 as the background image 410, and separate the foreground object 420 and the background image 410. Alternatively, in an embodiment, the processor 110 may also determine positions of facial landmarks in the initial image according to an ensemble of regression trees model, so as to determine a contour of the facial landmarks. The processor 110 may distinguish the foreground object 420 and the background image 410 in the initial image according to the contour C. However, enough instructions, recommendations for the method for analyzing the foreground object and the background image mentioned in the embodiment of the invention can be learned according to common knowledge of the technical field, and details thereof are not repeated.

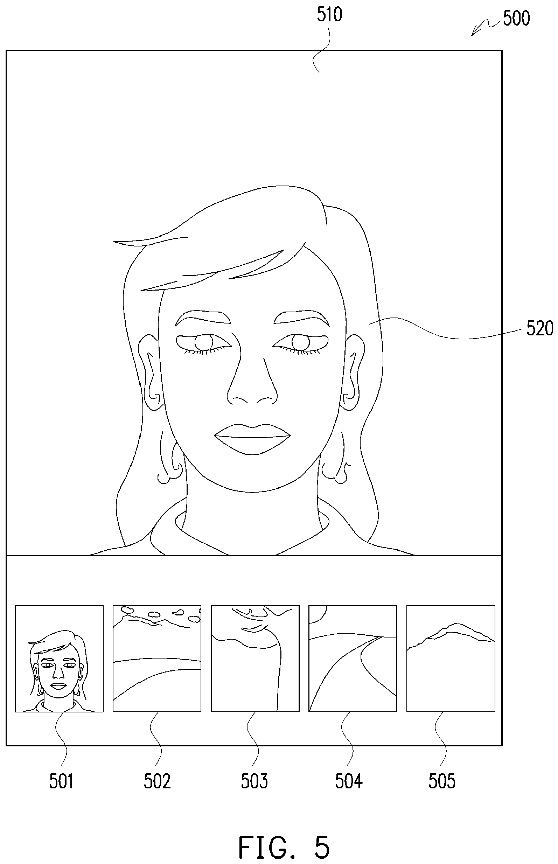

In step S330, the processor 110 displays a background selection frame (the frame shown in FIG. 5) through the screen 120 in response to a first operation according to whether the first operation performed to the initial frame 400 is received. In the present embodiment, the first operation refers to that the processor 110 identifies first gesture information according to whether the gesture sensor 150 acquires the first gesture information. When the first gesture information is complied with a first predetermined gesture, the processor 110 generates a first input instruction, and the screen 120 displays the background selection frame. The first gesture information, for example, refers to that the hand of the user moves upward, though the invention is not limited thereto. However, in an embodiment, the first operation may also refer to that the user touches or clicks a position of an icon 401 on the screen 120, such that the screen 120 generates a first touch signal, and the processor 110 controls the screen 120 to display the background selection frame according to the first touch signal.

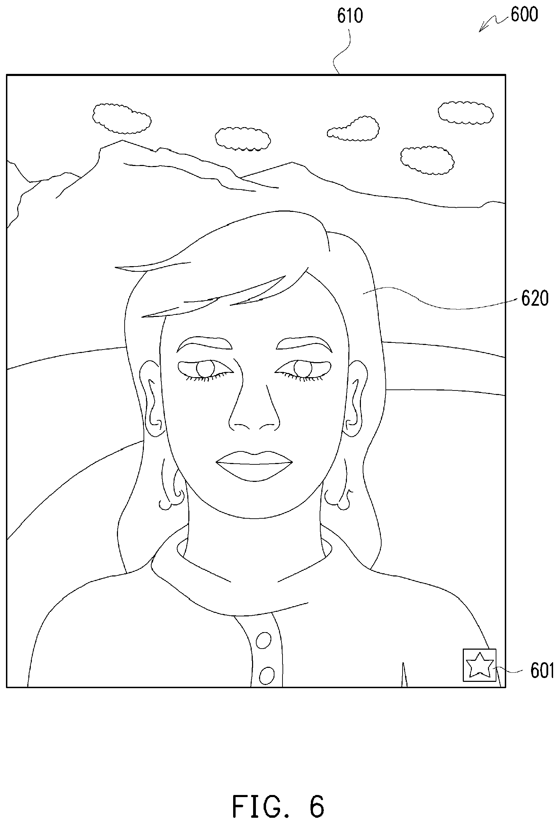

FIG. 5 is a schematic diagram of the background selection frame according to an embodiment of the invention. Referring to FIG. 5, in the step S330, the processor 110 integrates the foreground object 520 and a predetermined background image in response to reception of a second operation performed to the background selection frame 500, so as to generate an integrated image, and displays a switched result frame (the frame shown in FIG. 6) including the integrated image through the screen 120. For example, if an icon 502 is selected, the switched result frame may integrate the background image represented by the icon 502 with the foreground object 520. In the present embodiment, the second operation may refer to that the processor 110 identifies second gesture information according to whether the gesture sensor 150 acquires the second gesture information. When the second gesture information is complied with a second predetermined gesture, the processor 110 generates a second input instruction to execute a background selection function. The second gesture information may refer to that the hand of the user moves leftward or rightward, though the invention is not limited thereto. Moreover, an icon 501 of the background selection frame 500 may represent an original image (the initial image), and icons 502-505 may represent a plurality of predetermined background images. Moreover, one of the icons 501-505 can be marked according to the second input instruction to represent a present selection state. However, in an embodiment, the second operation may also refer to that the user touches or clicks a position of one of the icons 501-505 on the screen 120, such that the screen 120 generates a second touch signal, and the processor 110 controls the screen 120 to display the background selection frame according to the second touch signal.

In the present embodiment, the second operation may further refer to that the processor 110 identifies third gesture information according to whether the gesture sensor 150 acquires the third gesture information. When the third gesture information is complied with a third predetermined gesture, the processor 110 generates a third input instruction. Moreover, the processor 110 confirms a selection result of the background selection function to determine the predetermined background image, for example, to select the icon 502 to serve as the background image. The third gesture information may refer to that the hand of the user moves forward, though the invention is not limited thereto. Namely, the foreground object 520 of the background selection frame 500 is still the same face image, and the background image 510 can be switched to one of a plurality of background images represented by the icons 502-505 according to the selection result of the user. However, in an embodiment, the second operation may also refer to that the user touches or clicks a position of other icon on the screen 120, such that the screen 120 generates a third touch signal, and the processor 110 controls the screen 120 to display the selection result of the background image according to the third touch signal.

FIG. 6 is a schematic diagram of a switched result frame according to an embodiment of the invention. Referring to FIG. 6, in the present embodiment, the second operation may also refer to that the processor 110 identifies fourth gesture information according to whether the gesture sensor 150 acquires the fourth gesture information. When the fourth gesture information is complied with a fourth predetermined gesture, the processor 110 generates a fourth input instruction to end the background selection function, and displays a switched result frame 600 through the screen 120. In the present embodiment, the integrated image in the switched result frame 600 includes a foreground object 620 and a selected predetermined background image 610. The fourth gesture information may refer to that the hand of the user moves downward, though the invention is not limited thereto. Namely, the foreground object 620 of the switched result frame 600 is still the same face image, and the background image 610 is switched to the predetermined background image selected by the user. However, in an embodiment, the second operation may also refer to that the user touches or clicks a position of other icon on the screen 120, such that the screen 120 generates a fourth touch signal, and the processor 110 controls the screen 120 to display a switched result of the background image according to the fourth touch signal.

In summary, according to the electronic make-up mirror device and the background switching method thereof, the user may dynamically switch the background image through a touch manner or a gesture operation during a make-up process. In this way, during the make-up process, the user may feel a comfortable background image, or determine a proper method for putting on the make-up according to the selected background image, so as to achieve a good user experience.

## Claims

1. A background switching method, adapted to an electronic make-up mirror device (100), wherein the electronic make-up mirror device (100) comprises a screen (120), an image capturing device (130) and a gesture sensor (150), the background switching method comprising:
capturing an initial image by using the image capturing device (130), and displaying an initial frame (400) including the initial image through the screen (120);
analyzing the initial image to obtain a foreground object (420, 520, 620) and a background image (410, 510), wherein the foreground object (420, 520, 620) comprises a face image;
displaying a background selection frame (500) through the screen (120) in response to a first operation according to whether the first operation performed to the initial frame (400) is received; and
integrating the foreground object (420, 520, 620) and a predetermined background image (610) in response to reception of a second operation performed to the background selection frame (500), so as to generate an integrated image, and displaying a switched result frame (600) comprising the integrated image through the screen (120).

2. The background switching method as claimed in claim 1, wherein the first operation comprises:
identifying first gesture information according to whether the gesture sensor (150) acquires the first gesture information; and
generating a first input instruction when the first gesture information is complied with a first predetermined gesture, such that the screen (120) displays the background selection frame (500).

3. The background switching method as claimed in claim 1 or 2, wherein the second operation comprises:
identifying second gesture information according to whether the gesture sensor (150) acquires the second gesture information; and
generating a second input instruction when the second gesture information is complied with a second predetermined gesture, so as to execute a background selection function.

4. The background switching method as claimed in claim 3, wherein the second operation further comprises:
identifying third gesture information according to whether the gesture sensor (150) acquires the third gesture information; and
generating a third input instruction when the third gesture information is complied with a third predetermined gesture, and confirming a selection result of the background selection function to determine the predetermined background image (610).

5. The background switching method as claimed in claim 4, wherein the second operation further comprises:
identifying fourth gesture information according to whether the gesture sensor (150) acquires the fourth gesture information; and
generating a fourth input instruction when the fourth gesture information is complied with a fourth predetermined gesture, ending the background selection function, and displaying the switched result frame (600) through the screen (120).

6. The background switching method as claimed in any of the preceding claims, wherein the step of analyzing the initial image to obtain the foreground object (420, 520, 620) and the background image (410, 510) comprises:
analyzing the initial image according to a Gaussian mixture model, so as to obtain the foreground object (420, 520, 620) and the background image (410, 510).

7. The background switching method as claimed in any of the preceding claims, wherein the step of analyzing the initial image to obtain the foreground object (420, 520, 620) and the background image (410, 510) comprises:
determining a position of the face image in the initial image to determine a contour, and distinguishing the foreground object (420, 520, 620) and the background image (410, 510) in the initial image according to the contour.

8. An electronic make-up mirror device (100), comprising:
a screen (120);
a processor (110), coupled to the screen (120); and
an image capturing device (130), coupled to the processor (110), configured to capture an initial image, and displaying an initial frame (400) comprising the initial image through the screen (120),
wherein the processor analyzes the initial image to obtain a foreground object (420, 520, 620) and a background image (410, 510), and the foreground object (420, 520, 620) comprises a face image,
wherein the processor (110) displays a background selection frame (500) through the screen (120) in response to a first operation according to whether the first operation performed to the initial frame (400) is received,
wherein the processor (110) integrates the foreground object (420, 520, 620) and a predetermined background image (610) in response to reception of a second operation performed to the background selection frame (500), so as to generate an integrated image, and displays a switched result frame (600) comprising the integrated image through the screen (120).

9. The electronic make-up mirror device (100) as claimed in claim 8, further comprising:
a gesture sensor (150), wherein the first operation refers to that the processor (110) identifies first gesture information according to whether the gesture sensor (150) acquires the first gesture information, and generates a first input instruction when the first gesture information is complied with a first predetermined gesture, such that the screen (120) displays the background selection frame (500).

10. The electronic make-up mirror device (100) as claimed in claim 8 or 9, wherein the second operation refers to that the processor (110) identifies second gesture information according to whether the gesture sensor (150) acquires the second gesture information, and generates a second input instruction when the second gesture information is complied with a second predetermined gesture, so as to execute a background selection function.

11. The electronic make-up mirror device (100) as claimed in claim 10, wherein the second operation further refers to that the processor (110) identifies third gesture information according to whether the gesture sensor (150) acquires the third gesture information, and generates a third input instruction when the third gesture information is complied with a third predetermined gesture, so as to confirm a selection result of the background selection function, and determine the predetermined background image (610).

12. The electronic make-up mirror device (100) as claimed in claim 11, wherein the second operation further refers to that the processor (110) identifies fourth gesture information according to whether the gesture sensor (150) acquires the fourth gesture information, and generates a fourth input instruction when the fourth gesture information is complied with a fourth predetermined gesture, so as to ends the background selection function, and display the switched result frame (600) through the screen (120).

13. The electronic make-up mirror device (100) as claimed in any of claims 8 to 12, wherein the processor (110) analyzes the initial image according to a Gaussian mixture model, so as to obtain the foreground object (420, 520, 620) and the background image (410, 510).

14. The electronic make-up mirror device (100) as claimed in any of claims 8 to 13, wherein the processor (110) determines a position of the face image in the initial image to determine a contour, and distinguishes the foreground object (420, 520, 620) and the background image (410, 510) in the initial image according to the contour.
